# EUROPÄISCHE PATENTSCHRIFT

(11) **EP 3 941 794 B1**
(45) Veröffentlichungstag und Bekanntmachung des Hinweises auf die Patenterteilung: **31.08.2022**
(21) Anmeldenummer: 20735561.1
(22) Anmeldetag: 30.06.2020
(51) Int. Cl.: B61C 9/38, F16H 57/04

(54) **TRAKTIONSGETRIEBE**
GEARBOX
TRANSMISSION

(30) Priorität: 27.09.2019 EP 19200031
(43) Veröffentlichungstag der Anmeldung: 26.01.2022
(73) Patentinhaber: Traktionssysteme Austria GmbH, 2351 Wiener Neudorf (AT)
(72) Erfinder: FIALA, Pavel, 2351 Wiener Neudorf (AT); GÖTZ, Julia, 2351 Wiener Neudorf (AT); STOCKMAYER, Michael, 2351 Wiener Neudorf (AT)
(74) Vertreter: SONN Patentanwälte OG
(86) Internationale Anmeldenummer: PCT/EP2020/068348
(87) Internationale Veröffentlichungsnummer: WO 2021/058151

(56) Entgegenhaltungen:
- EP-A1- 0 548 044
- CN-U- 204 978 655
- CZ-A3- 2 008 552
- DE-C1- 19 831 208
- JP-A- H0 840 262
- US-A- 4 148 262
- US-B2- 10 106 178

## Beschreibung

Die Erfindung betrifft ein Traktionsgetriebe zur Übertragung der Drehung einer Antriebswelle auf ein mit einer Abtriebswelle drehfest verbundenes Schienenrad, mit zumindest zwei jeweils zumindest ein Kleinrad bzw. Ritzel und zumindest ein Großrad aufweisenden Getriebestufen, und mit einem Getriebegehäuse mit Lagern für die Antriebswelle und die Abtriebswelle und im Getriebegehäuse angeordnetem Getriebeöl, wobei die Antriebswelle über eine Labyrinthdichtung und die Abtriebswelle über eine Labyrinthdichtung gegenüber dem Getriebegehäuse abgedichtet ist, und in der Gebrauchslage die Antriebswelle unterhalb der Abtriebswelle angeordnet ist.

Die vorliegende Erfindung bezieht sich auf Traktionsgetriebe, wie sie zur Verbindung von Traktionsmaschinen, also elektrischen Antriebsmotoren vorzugsweise für schienengebundene Fahrzeuge, wie Straßenbahnen oder Eisenbahnen, eingesetzt werden.

Insbesondere bei Niederflurschienenfahrzeugen, welche ein bequemes Ein- und Aussteigen für die Passagiere ermöglichen, steht aufgrund des niedrigen Niveaus des Fußbodens nur sehr wenig Platz für das Fahrgestell, das Getriebe und die Antriebsmotoren zur Verfügung. Bei Schienenfahrzeugen können einzelne Räder oder Radsätze über entsprechende Getriebe mit jeweils einem Antriebsmotor angetrieben werden. Dementsprechend umfasst ein Fahrwerk mit vier Rädern üblicherweise zwei oder vier Antriebsmotoren und zwei oder vier Getriebe. Da Schienenfahrzeuge meist für zwei Fahrtrichtungen ausgelegt werden, müssen die elektrischen Maschinen und die Getriebe für beide Drehrichtungen ausgelegt werden.

Beispielsweise beschreibt die EP 0 548 044 B1 ein Schienenfahrzeug, dessen Drehgestell insbesondere für Niederflurschienenfahrzeuge mit geringer Fußbodenhöhe und somit beschränktem Platz für Fahrwerk, Getriebe und Antriebsmotoren ausgebildet ist. Dabei erfolgt der Antrieb vorzugsweise über Radnabenmotoren, welche direkt unter den Radkästen untergebracht werden. Die Radnabenmotoren treiben die Schienenräder über Planetengetriebe an.

Die JP H08 40262 A zeigt ein Traktionsgetriebe der gegenständlichen Art, bei dem die Antriebswelle unterhalb der mit dem Schienenrad drehfest verbundenen Abtriebswelle angeordnet sein kann.

Andere Traktionsgetriebe werden beispielsweise auch in der US 4 148 262 A beschrieben, wobei keine Details über die Art der Schmierung offenbart werden.

Bekannte Niederflurschienenfahrzeuge weisen aufgrund der größeren Bauweise der Antriebsmotoren, Getriebe und Drehgestelle Bereiche mit höherer Fußbodenhöhe bzw. Bereiche, welche für die Fahrgäste nicht zur Verfügung stehen, auf, was natürlich Nachteile für die Personenbeförderung, insbesondere im urbanen Gebiet, mit sich bringt.

Die Getriebe sollen möglichst klein ausgebildet sein aber dennoch eine hohe Lebensdauer und große Wartungsintervalle aufweisen und robust und einfach aufgebaut sein.

Die Aufgabe der vorliegenden Erfindung besteht in der Schaffung eines oben genannten Traktionsgetriebes, welches möglichst platzsparend, einfach und robust ausgebildet ist, sodass insbesondere eine Anwendung als Getriebe für Niederflurschienenfahrzeuge vorteilhaft ist. Das Traktionsgetriebe soll eine möglichst hohe Lebensdauer und große Wartungsintervalle aufweisen. Eine Anwendung bei besonders hoch drehenden Antriebsmotoren unter gleichzeitiger optimaler Schmierung soll möglich sein. Nachteile bekannter Traktionsgetriebe sollen vermieden oder zumindest reduziert werden.

Die erfindungsgemäße Aufgabe wird durch ein oben genanntes Traktionsgetriebe gelöst, bei dem unterhalb jedes Großrades jeder Getriebestufe ein separater Ölsumpf angeordnet ist, und mit dem Großrad oder einem Zwischenrad der ersten Getriebestufe eine Förderscheibe zum Fördern des Getriebeöls aus dem Ölsumpf der ersten Getriebestufe drehfest verbunden oder integriert ist und im Bereich der Förderscheibe zumindest eine Saugleitung angeordnet ist, welche im Bereich der Labyrinthdichtung der Antriebswelle mündet, und das Getriebegehäuse ein Befestigungselement zur schwenkbaren Anordnung um eine zur Drehachse der Antriebswelle und Abtriebswelle parallelen Achse, aufweist. Durch eine derartige schwenkbare Befestigung des Getriebes kann die Veränderung der Bodenfreiheit durch den Verschleiß des mit der Abtriebswelle verbundenen Schienenrades durch entsprechendes Nachführen des Traktionsgetriebes bis zu einem gewissen Grad ausgeglichen werden. Die schwenkbare Befestigung des Getriebegehäuses erfolgt über das zumindest eine Befestigungselement und geeignete Aufhängeelemente am Fahrgestell des anzutreibenden Schienenfahrzeugs. Dadurch, dass das Getriebe in seiner Gebrauchslage so angeordnet ist, dass die Antriebswelle unterhalb der Abtriebswelle angeordnet ist, ist eine Anwendung bei Niederflurschienenfahrzeugen besonders vorteilhaft. Die tieferliegende Antriebswelle des Getriebes wird mit einem entsprechend tief liegenden Antriebsmotor verbunden, sodass der Fußboden eines Schienenfahrzeuges noch tiefer angeordnet werden kann und somit noch mehr Platz für die Passagiere zur Verfügung steht bzw. ein bequemeres Ein- und Aussteigen ermöglicht wird. Beispielsweise weist das Getriebe zwei Getriebestufen auf, wobei in der ersten Getriebestufe noch ein zusätzliches Zwischenrad verbaut sein kann. Das Getriebe weist daher beispielsweise fünf Zahnräder auf, welche die Untersetzung insbesondere eines sehr schnell drehenden Antriebsmotors auf eine geeignete Umdrehungszahl eines Schienenrades eines Schienenfahrzeuges vornimmt. Beispielsweise sind Antriebsmaschinen mit einer maximalen Drehzahl von über 12.000 min⁻¹ möglich, wobei das Getriebe Untersetzungen im Bereich von 14,0 bis 17,0 auf geeigneten Drehzahlen am Schienenrad vornimmt. Beim Getriebeöl handelt es sich üblicherweise um ein vollsynthetisches Öl.

Dadurch, dass unterhalb jedes Großrades jeder Getriebestufe ein separater Ölsumpf angeordnet ist, kann eine optimale Schmierung aller Getriebestufen des Traktionsgetriebes erfolgen. Wichtig beim gegenständlichen Traktionsgetriebe mit der besonders tief liegenden Antriebswelle ist es, die Dichtungen insbesondere der Antriebswelle gegenüber dem Getriebegehäuse und die Förderung des Getriebeöls im Getriebegehäuse so zu gestalten, dass ein Austritt des Getriebeöls möglichst verhindert wird und die Schmierung der Lager sichergestellt ist.

Durch das mit dem Großrad oder einem Zwischenrad der ersten Getriebestufe drehfest verbundene oder integrierte Förderscheibe zum Fördern des Getriebeöls aus dem Ölsumpf der ersten Getriebestufe resultiert eine Tauchschmierung, wobei das Getriebeöl über die Förderscheibe aus dem Ölsumpf bzw. den einzelnen Ölsümpfen zu den höherliegenden Stellen transportiert wird. Die Förderscheibe ist drehfest mit dem Großrad oder einem Zwischenrad der Getriebestufe verbunden bzw. mit diesem einstückig hergestellt oder in diesem integriert. Entsprechend dreht sich die Förderscheibe mit einer relativ hohen Drehzahl von zum Beispiel 6.000 min⁻¹ und schleudert das Getriebeöl nach oben in Richtung Abtriebswelle. Die Förderscheibe kann als gefräster Zahnkranz ausgebildet sein, was herstellungstechnisch einfacher ist und eine Förderung des Getriebeöls bei beiden Drehrichtungen eines Antriebsmotors ermöglicht. Über geeignete Rücklaufkanäle gelangt das Getriebeöl wieder zurück in den bzw. jeden Ölsumpf.

Die Antriebswelle und die Abtriebswelle ist jeweils über eine Labyrinthdichtung gegenüber dem Getriebegehäuse abgedichtet. Durch eine solche vorzugsweise offene, verschleißfreie Labyrinthdichtung wird ein Austritt des Getriebeöls aus dem Getriebegehäuse im Wesentlichen verhindert.

Über die im Bereich der Förderscheibe angeordnete zumindest eine Saugleitung, welche im Bereich der Labyrinthdichtung der Antriebswelle mündet, wird eine Absaugung des Getriebeöls aus dem Bereich der Labyrinthdichtung zum Ölsumpf durch den Unterdruck, welchen die Förderscheibe erzeugt, erzielt und somit ein Austritt von Getriebeöl aus dem Getriebegehäuse verhindert.

Vorteilhafterweise ist die Antriebswelle eine vertikale Distanz zwischen 50 mm und 200 mm, insbesondere zwischen 120 mm und 140 mm, unter der Abtriebswelle angeordnet. Derartige Abmessungen haben sich insbesondere bei Niederflurschienenfahrzeugen als geeignet herausgestellt.

Das Getriebegehäuse ist vorzugsweise durch zumindest zwei Gehäuseteile gebildet, welche über entsprechende Verbindungselemente miteinander verbunden, vorzugsweise verschraubt werden. Bevorzugter Weise ist ein Gehäuseteil durch einen oberen Gehäuseteil und ein weiterer Gehäuseteil durch die Ölwanne gebildet.

Gemäß einem weiteren Merkmal der Erfindung ist die Höhe des Getriebegehäuse im Bereich der Antriebswelle kleiner als die Höhe des Getriebegehäuses im Bereich der Abtriebswelle, insbesondere um 30 % bis 70 % kleiner. Es resultiert somit in Seitenansicht eine L-förmige Gestalt des Getriebegehäuses, welche sich für den Einbau bei Niederflurschienenfahrzeugen besonders eignet, da ein Sitz für die Passagiere in besonders geeigneter Weise über dem Schienenrad und dem Getriebegehäuse und Antriebsmotor angeordnet werden kann, wobei der Passagier quasi über dem Getriebegehäuse sitzt und die Füße über der Antriebswelle anordnet.

Zusätzlich zur Labyrinthdichtung der Antriebswelle können berührende Dichtelemente angeordnet sein. Derartige zusätzliche Dichtungen können wegen der besonders tiefen Lage der Antriebswelle des Traktionsgetriebes in der Gebrauchslage des Getriebes für eine Dichtheit des Getriebegehäuses zweckmäßig sein.

An der Antriebswelle ist üblicherweise eine Kupplung, insbesondere eine Ausgleichskupplung, beispielsweise eine Bogenzahnkupplung, angeordnet. Die Kupplung gleicht neben Primärfederwegen auch die Verlagerungen, welche durch die Kompensation des Verschleißes eines Fahrzeugrades eintreten, in geeigneter Weise aus.

Um das Getriebeöl einfach in das Getriebe einfüllen zu können, ist am Getriebegehäuse zumindest ein verschließbarer Einlass für das Getriebeöl angeordnet.

Zum einfachen Wechseln oder Ablassen des Getriebeöls ist am Getriebegehäuse vorzugsweise zumindest ein verschließbarer Auslass für das Getriebeöl angeordnet.

Zur Kontrolle des Pegels des Getriebeöls kann am Getriebegehäuse zumindest ein Schauglas an einer dafür geeigneten Stelle angeordnet sein.

Wenn am Getriebegehäuse zumindest eine Entlüftungsöffnung angeordnet ist, können Druckschwankungen im Getriebegehäuse, wie sie zum Beispiel durch Temperaturschwankungen auftreten, ausgeglichen werden und es wird die Entstehung eines Unterdrucks oder Überdrucks im Getriebegehäuse verhindert. Die zumindest eine Entlüftungsöffnung kann mit einer geeigneten Kappe abgedeckt sein, um den Eintritt von Schmutz ins Innere des Getriebegehäuses zu verhindern.

Am Getriebegehäuse können entsprechend gestaltete Abschleuderflächen zum Schleudern des Getriebeöls in Richtung der höher liegenden Antriebswelle angeordnet sein.

Weiters sind am Getriebegehäuse innenseitig vorzugsweise Fangtaschen zum Auffangen und Weiterleiten des Getriebeöls vorgesehen. Derartige Fangtaschen sind vorzugsweise mit dem Getriebegehäuse einstückig hergestellt und so wie das Getriebegehäuse selbst entsprechend geeignet geformt, sodass das Getriebeöl zu den gewünschten Regionen innerhalb des Getriebegehäuses transportiert werden kann.

Die vorliegende Erfindung wird anhand der beigefügten Zeichnungen näher erläutert. Darin zeigen
- Fig. 1: eine schematische Ansicht auf eine Ausführungsform eines Traktionsgetriebes zur Übertragung der Drehung einer Antriebswelle auf eine Abtriebswelle;
- Fig. 2: eine andere schematische Ansicht auf eine weitere Ausführungsform eines Traktionsgetriebes mit einem Befestigungselement zur schwenkbaren Anordnung;
- Fig. 3: ein Schnittbild durch eine Ausführungsform eines Traktionsgetriebes entlang einer durch die Antriebswelle und Abtriebswelle gehende Schnittlinie III-III aus Fig. 1;
- Fig. 4: ein Schnittbild durch das Traktionsgetriebe entlang der Schnittlinie IV-IV aus Fig. 3;
- Fig. 5: ein Schnittbild durch das Traktionsgetriebe entlang der Antriebswelle entlang der Schnittlinie V-V gemäß Fig. 3;
- Fig. 6: einen vertikalen Schnitt durch das Getriebegehäuse einer weiteren Ausführungsform des Traktionsgetriebes;
- Fig. 7: einen vertikalen Schnitt durch ein Getriebegehäuse einer weiteren Ausführungsform eines Traktionsgetriebes; und
- Fig. 8: ein Schnittbild durch eine weitere Ausführungsform eines Traktionsgetriebes im Bereich der Antriebswelle.

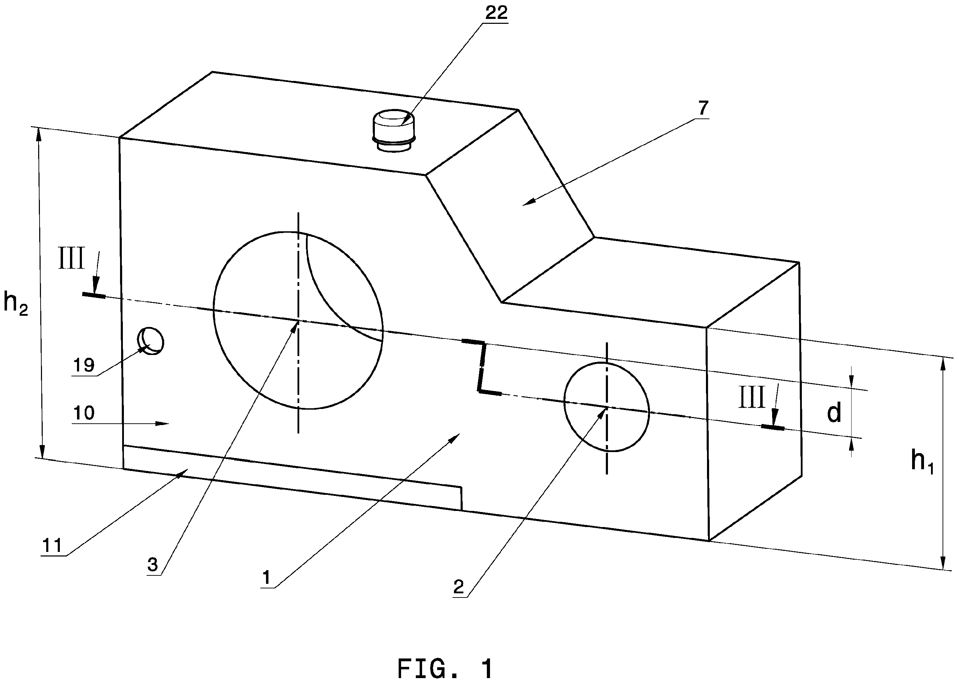

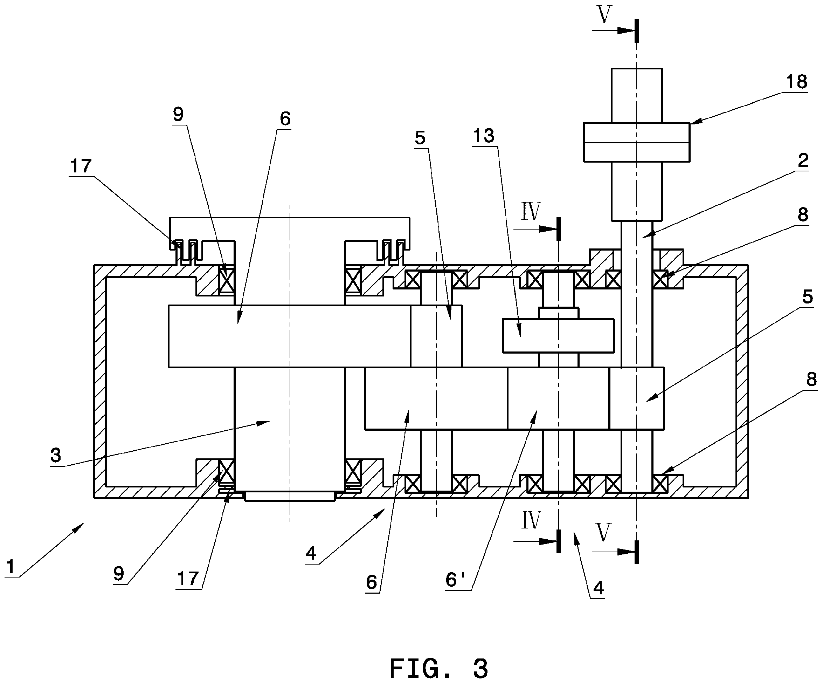

Fig. 1 zeigt eine schematische Ansicht auf eine Ausführungsform eines Traktionsgetriebes 1 zur Übertragung der Drehung einer Antriebswelle 2 auf ein mit einer Abtriebswelle 3 drehfest verbundenes Schienenrad eines Schienenfahrzeugs, insbesondere eines Niederflurschienenfahrzeugs (nicht dargestellt). Das Traktionsgetriebe 1 weist zumindest zwei Getriebestufen 4 (siehe Fig. 3) auf. Das Traktionsgetriebe 1 ist von einem Getriebegehäuse 7 umgeben, welches durch zumindest zwei Gehäuseteile 10, 11 gebildet ist. Ein Gehäuseteil 10 kann durch einen oberen Gehäuseteil gebildet sein und ein weiterer Gehäuseteil 11 durch die Ölwanne. Im Getriebegehäuse 7 ist vorzugsweise zumindest ein Einlass 19 für das Getriebeöl G und zumindest eine Entlüftungsöffnung 22 angeordnet, über welche bei temperaturbedingter Ausdehnung oder Komprimierung der Luft im Inneren des Getriebegehäuses 7 Luft entweichen oder angesaugt werden kann. Die zumindest eine Entlüftungsöffnung 22 kann mit einer geeigneten Kappe abgedeckt sein, um den Eintritt von Schmutz ins Innere des Getriebegehäuses 7 zu verhindern.

Das Traktionsgetriebe 1 ist so ausgebildet, dass in der Gebrauchslage des Traktionsgetriebes 1 die Antriebswelle 2 unterhalb der Abtriebswelle 3 angeordnet ist. Die tiefer liegende Antriebswelle 2 des Traktionsgetriebes 1 wird mit einem entsprechend tief liegenden Antriebsmotor (nicht dargestellt) verbunden, wodurch der Fußboden eines Schienenfahrzeugs im Bereich des Drehgestells noch tiefer angeordnet werden kann und somit insbesondere bei einem stufenlosen bzw. barrierefreien Fahrgastraum eine niedrige Einstiegshöhe erreicht wird, die ein bequemes Ein- und Aussteigen der Passagiere ermöglicht. Dies ist insbesondere für 100%-Niederflurschienenfahrzeuge von Vorteil.

Die Höhe h₁ des Getriebegehäuses 7 im Bereich der Antriebswelle 2 ist vorzugsweise 30% bis 70% geringer als die Höhe h₂ des Getriebegehäuses 7 im Bereich der Abtriebswelle 3. Die vertikale Distanz d zwischen der Antriebswelle 2 und Abtriebswelle 3 beträgt vorzugsweise 50 bis 200 mm, insbesondere 120 bis 140 mm.

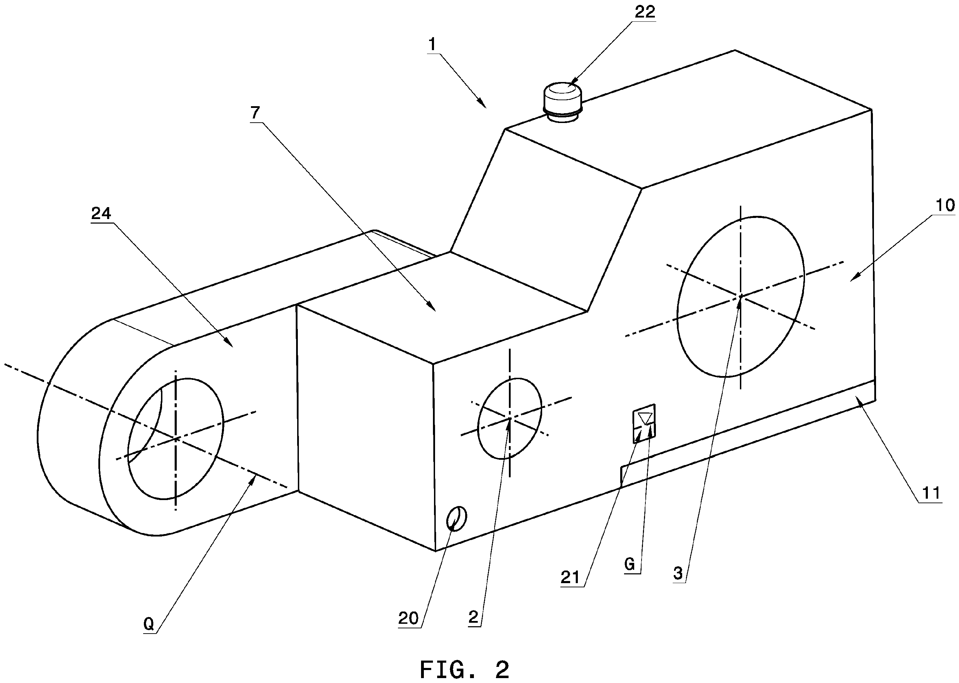

Wie der Ausführungsform eines Traktionsgetriebes 1 gemäß Fig. 2 entnommen werden kann, ist am Getriebegehäuse 7 vorzugsweise auch zumindest ein Auslass 20 für das Getriebeöl G und zumindest ein Schauglas 21 zur Kontrolle des Pegels des Getriebeöls G an einer geeigneten Stelle angeordnet.

Bei der Ausführungsform des Getriebegehäuses 7 gemäß Fig. 2 ist weiters ein Befestigungselement 24 zur schwenkbaren Befestigung des Traktionsgetriebes 1 um eine zur Drehachse der Antriebswelle 2 und Abtriebswelle 3 parallelen Achse Q vorgesehen. Durch eine derartige schwenkbare Befestigung des Traktionsgetriebes 1 bzw. Getriebegehäuses 7 kann die Veränderung der Bodenfreiheit durch den Verschleiß eines mit der Abtriebswelle 3 verbundenen Schienenrades eines Schienenfahrzeuges durch entsprechendes Nachführen des Traktionsgetriebes 1 bis zu einem gewissen Grad ausgeglichen werden.

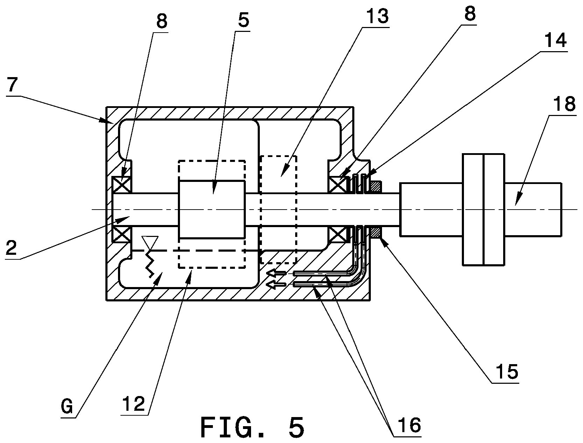

Fig. 3 zeigt einen Schnitt durch eine Ausführungsform eines Traktionsgetriebes 1 entlang der Schnittlinie III-III aus Fig. 1, welche durch die Antriebswelle 2 und die Abtriebswelle 3 verläuft. Das Traktionsgetriebe 1 umfasst zwei Getriebestufen 4 mit jeweils zumindest einem Kleinrad 5 bzw. Ritzel und zumindest einem einem Großrad 6, wobei in der ersten Getriebestufe 4 noch ein zusätzliches Zwischenrad 6' verbaut ist. Das Traktionsgetriebe 1 weist daher beispielsweise fünf Zahnräder 5, 6, 6' auf, welche die Untersetzung insbesondere eines sehr schnell drehenden Antriebsmotors auf eine geeignete Umdrehungszahl eines Schienenrades eines Schienenfahrzeuges vornimmt. Im Getriebegehäuse 7 sind die Lager 8 für die Antriebswelle 2, Lager 9 für die Abtriebswelle 3 und allfällig weitere Lager für Wellen der zwischengeschalteten Getriebestufen 4 angeordnet. Die Antriebswelle 2 kann über eine Kupplung 18 mit einem Antriebsmotor (nicht dargestellt) verbunden werden. Die Abtriebswelle 3 wird beispielsweise mit einem Schienenrad (nicht dargestellt) eines Schienenfahrzeugs verbunden. Das Traktionsgetriebe 1 ist so konzipiert, dass das Getriebeöl G bei Drehung der Antriebswelle 2 auch in die höheren Regionen innerhalb des Getriebegehäuses 7 gelangt und die Schmierung der Lager sichergestellt ist, jedoch ein Austritt des Getriebeöls G aus dem Getriebegehäuse 7 möglichst verhindert wird. Zu diesem Zweck ist die Antriebswelle 2 über eine Labyrinthdichtung 14 (s. Fig. 5) und die Abtriebswelle 3 über eine Labyrinthdichtung 17 gegenüber dem Getriebegehäuse 7 abgedichtet. Die Lager 8, 9 können beispielsweise durch entsprechende Wälzlager gebildet sein.

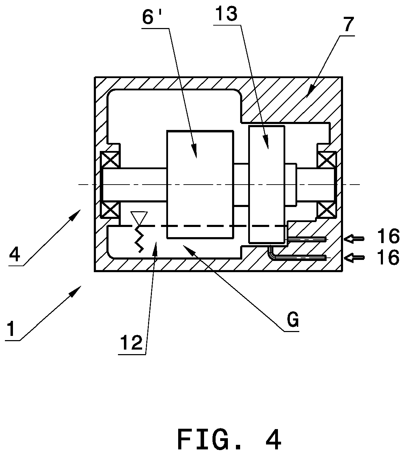

Fig. 4 zeigt einen vertikalen Schnitt durch eine Ausführungsform eines Traktionsgetriebes 1 entlang der Schnittlinie IV-IV aus Fig. 3. Dabei ist mit dem Zwischenrad 6' vorzugsweise der ersten Getriebestufe 4 eine Förderscheibe 13 drehfest verbunden, durch welche Förderscheibe 13 das Getriebeöl G aus dem Ölsumpf 12 zu den höher liegenden Stellen transportiert wird. Im Bereich der Förderscheibe 13 kann zumindest eine Saugleitung 16 angeordnet sein, welche vorzugsweise im Bereich der Labyrinthdichtung 14 der Antriebswelle 2 (siehe Fig. 5) mündet. Über die zumindest eine Saugleitung 16 wird eine Absaugung des Getriebeöls G aus dem Bereich der Labyrinthdichtung 14 der Antriebswelle 2 erzielt und dadurch ein Austritt von Getriebeöl G aus dem Getriebegehäuse 7 verhindert.

Fig. 5 zeigt einen vertikalen Schnitt durch das Traktionsgetriebe 1 im Bereich der Antriebswelle 2 entlang der Schnittlinie V-V aus Fig. 3. Dabei ist die Labyrinthdichtung 14 zur Abdichtung der Antriebswelle 2 gegenüber dem Getriebegehäuse 7 dargestellt. Grundsätzlich können weitere Dichtelemente 15 angeordnet sein, um den Austritt von Getriebeöl G aus dem Inneren des Getriebegehäuses 7 im Bereich der Antriebswelle 2 zu verhindern.

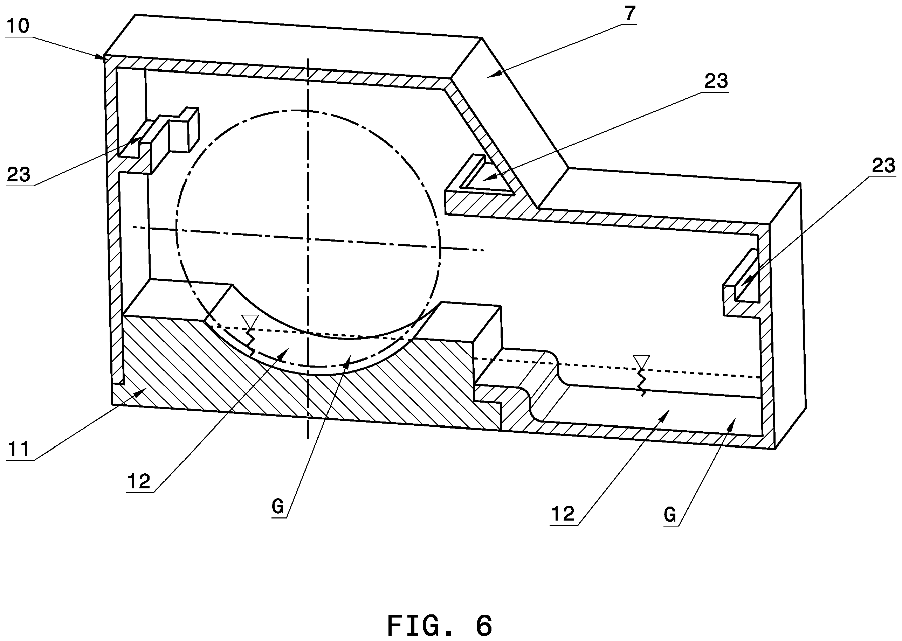

Fig. 6 zeigt einen Schnitt durch ein Getriebegehäuse 7 einer weiteren Ausführungsform eines Traktionsgetriebes 1, wobei in einem der Gehäuseteile 10, 11 des Getriebegehäuses 7 Fangtaschen 23 angeordnet sind, welche zum Auffangen und Weiterleiten des Getriebeöls G vorgesehen sind. Die Fangtaschen 23 sind vorzugsweise mit dem Getriebegehäuse 7 einstückig hergestellt und so wie das Getriebegehäuse 7 selbst entsprechend geeignet geformt, sodass das Getriebeöl G zu den gewünschten Regionen innerhalb des Getriebegehäuses 7 transportiert werden kann. Alternativ zur einstückigen Herstellung der Fangtaschen 23 mit dem Getriebegehäuse 7 können die Fangtaschen 23 auch mit dem Getriebegehäuse 7 verbunden, beispielsweise verschraubt werden. Durch geeignete Gestaltung separater Ölsümpfe 12 kann ein unterschiedlicher Pegel des Getriebeöls G in den einzelnen Ölsümpfen 12 erreicht werden. Dadurch kann die im Umlauf befindliche Menge an Getriebeöl G so beeinflusst werden, dass eine ausreichende Ölförderung zu den Lagern und in den Zahneingriff der Zahnräder des Getriebes 1 gewährleistet wird und gleichzeitig Plantschverluste minimiert werden.

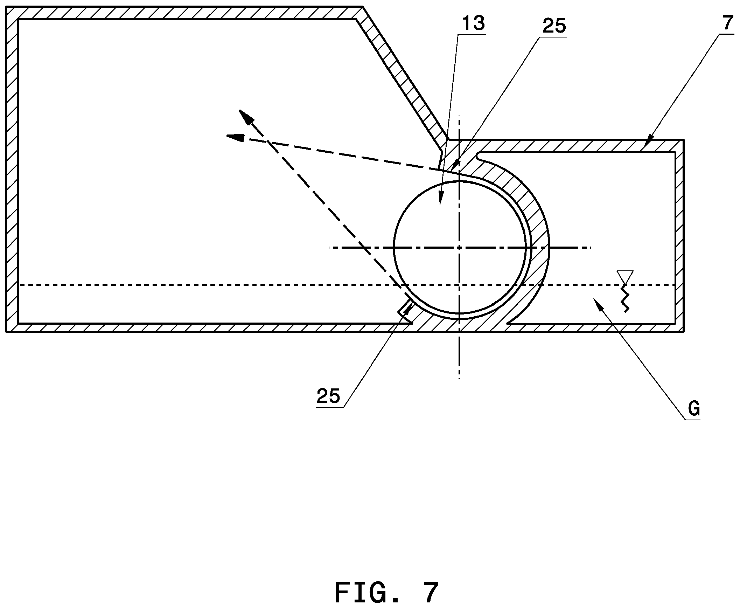

Fig. 7 zeigt ein weiteres Schnittbild durch das Getriebegehäuse 7, wobei Abschleuderflächen 25 im Getriebegehäuse 7 angeordnet sind und vorzugsweise mit diesem einstückig hergestellt sind, über welche das Abschleudern des Getriebeöls G bei Drehung der Förderscheibe 13 unterstützt wird und somit das Transportieren des Getriebeöls G in höher gelegene Regionen innerhalb des Getriebegehäuses 7 unterstützt wird. Alternativ zur einstückigen Herstellung der Asbschleuderflächen 25 mit dem Getriebegehäuse 7 können die Abschleuderflächen 25 auch mit dem Getriebegehäuse 7 verbunden, beispielsweise verschraubt werden.

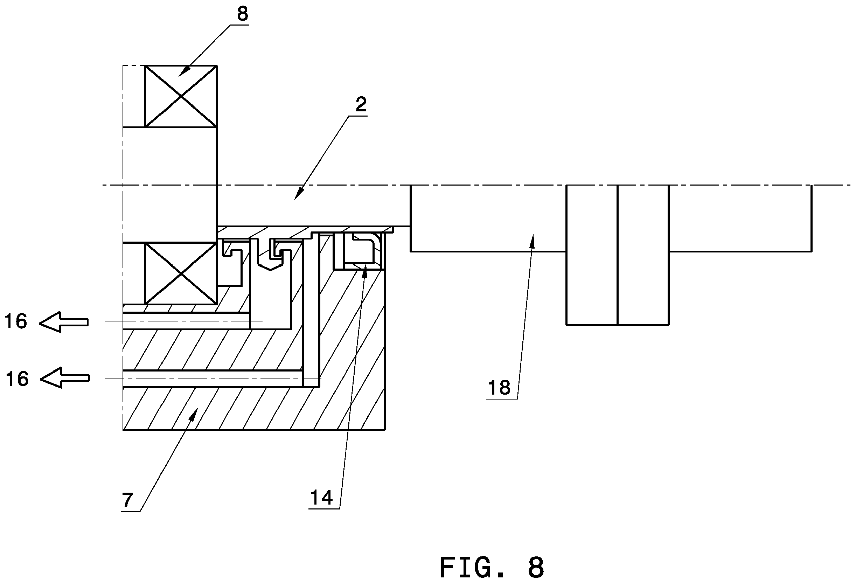

Fig. 8 zeigt schließlich eine Detailansicht durch eine Ausführungsform des Traktionsgetriebes 1 im Bereich der Antriebswelle 2, wobei die Labyrinthdichtung 14 zur Abdichtung der Antriebswelle 2 gegenüber dem Getriebegehäuse 7 dargestellt ist. Über Saugleitungen 16 im Bereich der Antriebswelle 2 wird das Getriebeöl G über die Förderscheibe 13 abgesaugt. Wie bereits bei Fig. 3 erwähnt, ist die Antriebswelle 2 vorzugsweise über eine Kupplung 18, insbesondere eine Ausgleichskupplung, beispielsweise eine Bodenzahnkupplung mit einem Antriebsmotor (nicht dargestellt) verbunden. Die Kupplung 18 gleicht neben Primärfederwegen auch die Verlagerungen, welche durch die Kompensation des Verschleißes eine Schienenrades eintreten, geeigneter Weise aus.

## Patentansprüche

1. Traktionsgetriebe (1) zur Übertragung der Drehung einer Antriebswelle (2) auf ein mit einer Abtriebswelle (3) drehfest verbundenes Schienenrad, mit zumindest zwei jeweils zumindest ein Kleinrad (5) bzw. Ritzel und zumindest ein Großrad (6) aufweisenden Getriebestufen (4), und mit einem Getriebegehäuse (7) mit Lagern (8, 9) für die Antriebswelle (2) und die Abtriebswelle (3) und im Getriebegehäuse (7) angeordnetem Getriebeöl (G), wobei die Antriebswelle (2) über eine Labyrinthdichtung (14) und die Abtriebswelle (3) über eine Labyrinthdichtung (17) gegenüber dem Getriebegehäuse (7) abgedichtet ist, und in der Gebrauchslage die Antriebswelle (2) unterhalb der Abtriebswelle (3) angeordnet ist, **dadurch gekennzeichnet, dass** unterhalb jedes Großrades (6) jeder Getriebestufe (4) ein separater Ölsumpf (12) angeordnet ist, und mit dem Großrad (6) oder einem Zwischenrad (6') der ersten Getriebestufe (4) eine Förderscheibe (13) zum Fördern des Getriebeöls (G) aus dem Ölsumpf (12) der ersten Getriebestufe (4) drehfest verbunden oder integriert ist und im Bereich der Förderscheibe (13) zumindest eine Saugleitung (16) angeordnet ist, welche im Bereich der Labyrinthdichtung (14) der Antriebswelle (2) mündet, und dass das Getriebegehäuse (7) ein Befestigungselement (24) zur schwenkbaren Anordnung um eine zur Drehachse der Antriebswelle (2) und Abtriebswelle (3) parallelen Achse (Q) aufweist.

2. Traktionsgetriebe (1) nach Anspruch 1, **dadurch gekennzeichnet, dass** die Antriebswelle (2) eine vertikale Distanz (d) zwischen 50 mm und 200 mm, insbesondere zwischen 120 mm und 140 mm, unter der Abtriebswelle (3) angeordnet ist.

3. Traktionsgetriebe (1) nach Anspruch 1 oder 2, **dadurch gekennzeichnet, dass** das Getriebegehäuse (7) durch zumindest zwei Gehäuseteile (10, 11) gebildet ist.

4. Traktionsgetriebe (1) nach einem der Ansprüche 1 bis 3, **dadurch gekennzeichnet, dass** die Höhe (h₁) des Getriebegehäuses (7) im Bereich der Antriebswelle (2) kleiner ist als die Höhe (h₂) des Getriebegehäuses (7) im Bereich der Abtriebswelle (3), insbesondere 30 % bis 70 % kleiner.

5. Traktionsgetriebe (1) nach einem der Ansprüche 1 bis 4, **dadurch gekennzeichnet, dass** zusätzlich zur Labyrinthdichtung (14) der Antriebswelle (2) und bzw. oder der Labyrinthdichtung (17) der Abtriebswelle berührende Dichtelemente (15) angeordnet sind.

6. Traktionsgetriebe (1) nach einem der Ansprüche 1 bis 5, **dadurch gekennzeichnet, dass** an der Antriebswelle (2) eine Kupplung (18), insbesondere eine Ausgleichskupplung, beispielsweise eine Bogenzahnkupplung, angeordnet ist.

7. Traktionsgetriebe (1) nach einem der Ansprüche 1 bis 6, **dadurch gekennzeichnet, dass** am Getriebegehäuse (7) zumindest ein verschließbarer Einlass (19) und zumindest ein verschließbarer Auslass (20) für das Getriebeöl (G) angeordnet ist.

8. Traktionsgetriebe (1) nach einem der Ansprüche 1 bis 7, **dadurch gekennzeichnet, dass** am Getriebegehäuse (7) zumindest ein Schauglas (21) zur Kontrolle des Pegels des Getriebeöls (G) und zumindest eine Entlüftungsöffnung (22) angeordnet ist.

9. Traktionsgetriebe (1) nach einem der Ansprüche 1 bis 8, **dadurch gekennzeichnet, dass** am Getriebegehäuse (7) Abschleuderflächen (25) zum Schleudern des Getriebeöls (G) in Richtung der höher liegenden Antriebswelle (3) angeordnet sind.

10. Traktionsgetriebe (1) nach einem der Ansprüche 1 bis 9, **dadurch gekennzeichnet, dass** am Getriebegehäuse (7) innenseitig Fangtaschen (23) zum Auffangen und Weiterleiten des Getriebeöls (G) vorgesehen sind.

## Claims

1. Traction transmission (1) for purposes of transmitting the rotation of an input drive shaft (2) to a rail wheel which is connected in a rotationally fixed manner to an output drive shaft (3), with at least two transmission stages (4), in each case having at least one small gear (5) or pinion, and at least one large gear (6), and with a transmission housing (7) with bearings (8, 9) for the input drive shaft (2) and the output drive shaft (3), and with transmission oil (G) arranged in the transmission housing (7), wherein the input drive shaft (2) is sealed off from the transmission housing (7) by means of a labyrinth seal (14), and the output drive shaft (3) is sealed off from the transmission housing (7) by means of a labyrinth seal (17), and in the position of use the input drive shaft (2) is arranged below the output drive shaft (3), a separate oil sump (12) is arranged below each large gear (6) of each transmission stage (4), and a feeder disc (13), for purposes of feeding the transmission oil (G) from the oil sump (12) of the first transmission stage (4), is connected in a rotationally fixed manner to, or integrated with, the large gear (6), or an intermediate gear (6'), of the first transmission stage (4), and at least one suction line (16) is arranged in the region of the feeder disc (13), which opens out in the region of the labyrinth seal (14) of the input drive shaft (2), and in that, the transmission housing (7) has an attachment element (24) for purposes of a pivotable arrangement about an axis (Q) parallel to the axis of rotation of the input drive shaft (2) and output drive shaft (3).

2. Traction transmission (1) according to Claim 1, **characterised in that**, the input drive shaft (2) is arranged a vertical distance (d) of between 50 mm and 200 mm, in particular of between 120 mm and 140 mm, below the output drive shaft (3).

3. Traction transmission (1) according to Claim 1 or 2, **characterised in that**, the transmission housing (7) is formed by at least two housing parts (10, 11).

4. Traction transmission (1) according to one of the Claims 1 to 3, **characterised in that**, the height (h₁) of the transmission housing (7) in the region of the input drive shaft (2) is less than the height (h₂) of the transmission housing (7) in the region of the output drive shaft (3), in particular 30 % to 70 % less.

5. Traction transmission (1) according to one of the Claims 1 to 4, **characterised in that**, contacting sealing elements (15) are arranged, in addition to the labyrinth seal (14) of the input drive shaft (2), and/or the labyrinth seal (17) of the output drive shaft.

6. Traction transmission (1) according to one of the Claims 1 to 5, **characterised in that**, a coupling (18), in particular a compensating coupling, for example a curved-tooth coupling, is arranged on the input drive shaft (2).

7. Traction transmission (1) according to one of the Claims 1 to 6, **characterised in that**, at least one closable inlet (19) and at least one closable outlet (20) for the transmission oil (G) are arranged on the transmission housing (7).

8. Traction transmission (1) according to one of the Claims 1 to 7, **characterised in that**, at least one sight glass (21) for purposes of checking the level of the transmission oil (G), and at least one vent opening (22), are arranged on the transmission housing (7) .

9. Traction transmission (1) according to one of the Claims 1 to 8, **characterised in that**, throw-off surfaces (25) are arranged on the transmission housing (7) for purposes of throwing the transmission oil (G) off in the direction of the higher drive shaft (3) .

10. Traction transmission (1) according to one of the Claims 1 to 9, **characterised in that**, catching pockets (23) are provided on the inner face of the transmission housing (7) for purposes of catching and onward direction of the transmission oil (G).

## Revendications

1. Transmission de traction (1) pour la transmission de la rotation d'un arbre d'entraînement (2) sur une roue ferroviaire reliée solidairement en rotation à un arbre de sortie (3), avec au moins deux étages de transmission (4) présentant respectivement au moins une petite roue (5) ou un pignon et au moins une grande roue (6), et avec une boîte de transmission (7) avec des paliers (8, 9) pour l'arbre d'entraînement (2) et l'arbre de sortie (3) et une huile de transmission (G) agencée dans la boîte de transmission (7), dans laquelle l'arbre d'entraînement (2) est étanchéifié via une garniture en labyrinthe (14) et l'arbre de sortie (3) est étanchéifié via une garniture en labyrinthe (17) vis-à-vis de la boîte de transmission (7), et dans la position d'utilisation l'arbre d'entraînement (2) est agencé en-dessous de l'arbre de sortie (3), **caractérisée en ce qu'**en-dessous de chaque grande roue (6) de chaque étage de transmission (4) est agencée une cuvette d'huile (12) séparée, et avec la grande roue (6) ou une roue intermédiaire (6') du premier étage de transmission (4) un disque d'acheminement (13) pour acheminer l'huile de transmission (G) hors de la cuvette d'huile (12) du premier étage de transmission (4) est relié solidairement en rotation ou intégré, et dans la région du disque d'acheminement (13) est agencée au moins une conduite d'aspiration (16), laquelle débouche dans la région de la garniture en labyrinthe (14) de l'arbre d'entraînement (2), et **en ce que** la boîte de transmission (7) présente un élément de fixation (24) pour un agencement en pivotement autour d'un axe (Q) parallèle à l'axe de rotation de l'arbre d'entraînement (2) et de l'arbre de sortie (3).

2. Transmission de traction (1) selon la revendication 1, **caractérisée en ce que** l'arbre d'entraînement (2) est agencé à une distance (d) verticale entre 50 mm et 200 mm, en particulier entre 120 mm et 140 mm, sous l'arbre de sortie (3).

3. Transmission de traction (1) selon la revendication 1 ou 2, **caractérisée en ce que** la boîte de transmission (7) est formée d'au moins deux parties de boîte (10, 11).

4. Transmission de traction (1) selon l'une des revendications 1 à 3, **caractérisée en ce que** la hauteur (h₁) de la boîte de transmission (7) dans la région de l'arbre d'entraînement (2) est inférieure à la hauteur (h₂) de la boîte de transmission (7) dans la région de l'arbre de sortie (3), en particulier inférieure de 30 % à 70 %.

5. Transmission de traction (1) selon l'une des revendications 1 à 4, **caractérisée en ce qu'**en plus de la garniture en labyrinthe (14) de l'arbre d'entraînement (2) et/ou de la garniture en labyrinthe (17) de l'arbre de sortie sont agencés des éléments d'étanchéité (15) qui affleurent.

6. Transmission de traction (1) selon l'une des revendications 1 à 5, **caractérisée en ce qu'**au niveau de l'arbre d'entraînement (2) est agencé un accouplement (18), en particulier un accouplement compensateur, par exemple un accouplement à denture courbe.

7. Transmission de traction (1) selon l'une des revendications 1 à 6, **caractérisée en ce qu'**au niveau de la boîte de transmission (7) est agencée pour l'huile de transmission (G) au moins une admission (19) pouvant être fermée et au moins une évacuation (20) pouvant être fermée.

8. Transmission de traction (1) selon l'une des revendications 1 à 7, **caractérisée en ce qu'**au niveau de la boîte de transmission (7) est agencée au moins une vitre d'observation (21) pour le contrôle du niveau de l'huile de transmission (G) et au moins une ouverture d'aération (22).

9. Transmission de traction (1) selon l'une des revendications 1 à 8, **caractérisée en ce qu'**au niveau de la boîte de transmission (7) sont agencées des surfaces de centrifugation (25) pour la centrifugation de l'huile de transmission (G) dans la direction de l'arbre de sortie (3) situé plus haut.

10. Transmission de traction (1) selon l'une des revendications 1 à 9, **caractérisée en ce qu'**au niveau de la boîte de transmission (7) sont prévues sur le côté intérieur des poches de captage (23) pour capter et continuer à guider l'huile de transmission (G).
